# EUROPEAN PATENT APPLICATION

(11) **EP 4 621 512 A1**
(43) Date of publication of application: **24.09.2025**
(21) Application number: 25163772.4
(22) Date of filing: 14.03.2025
(51) Int. Cl.: G05B 23/02

(54) **ALARM MANAGEMENT APPARATUS, ALARM MANAGEMENT METHOD, AND ALARM MANAGEMENT PROGRAM**

(30) Priority: 19.03.2024 JP 2024044112
(71) Applicant: Yokogawa Electric Corporation, Tokyo 180-8750 (JP)
(72) Inventor: ONO, Yusuke, Musashino-shi, Tokyo, 180-8750, (JP); YOSHINAGA, Mayumi, Musashino-shi, Tokyo, 180-8750, (JP); HONDA, Kengo, Musashino-shi, Tokyo, 180-8750, (JP)
(74) Representative: Winter, Brandl - Partnerschaft mbB

(57) **Abstract**

An alarm management apparatus (10) includes a determination unit (12c) that, when conditions for generation of a plurality of alarms in a device that is a subject of monitoring are met, determines whether each of the alarms is a subject of inhibition that is inhibited from being displayed on a screen on which a notification on alarm generation is made; and a display controller (12d) that, when there is an alarm that is the inhibition subject, changes a style of displaying the alarms according to a type of each user who monitors alarms and outputs the style to a screen that each user browses and, when an alarm that is the subject of inhibition is not contained, outputs each of the alarms to screens the respective users browse.

## Description

### FIELD

The present disclosure relates to an alarm management apparatus, an alarm management method, and an alarm management program.

### BACKGROUND

Alarm management systems that monitor alarms representing abnormalities in processes, or the like, are used in various fields. For example, alarm management systems in plants are strictly standardized according to international standards, such as ISA18.2 and IEC62682, because of the features that are functions for quickly sensing risks at the plant sites, protecting the assets of the companies, and protecting the lives of workers who work at the plant sites. According to the above-described standards, essential functions and recommended functions are defined as alarm basic functions that the alarm management systems should meet and each control system vender implements an alarm management system along the above-described definition.

Patent Literature 1: Japanese Laid-open Patent Publication No. 2022-177415

The conventional technology however has difficulty in flexibly expressing and providing information on alarms to various operators who monitors alarms. For example, when conditions for generation of a plurality of alarms are met, a terminal device of an operator who performs monitoring is often caused to display not symbols of a plurality of alarm statuses but only a symbol of an alarm status with the top propriety representatively. This is for inhibiting display of symbols of other alarm status such that the operator concentrates on handling the crucial alarm.

When a higher operator who grasps the current situation in a more overviewing manner than the operator grasps the status in macro perspective, the higher operator sometimes monitors the situation of an area wider than that monitored by the operator, that is, on an area-by-area basis or a plant-by-plant basis. In this case, the higher operator has to grasp not only a symbol in an alarm status that is displayed representatively but also inhibited other alarm statuses. It is thus difficult for the higher operator in alarm monitoring in the plant to flexibly express and provide information on the inhibited alarms.

The present disclosure was made in view of the above-described circumstances and an object of the present disclosure is to provide a necessary alarm to each operator.

### SUMMARY

According to an aspect of the embodiments, an alarm management apparatus includes a determination unit that, when conditions for generation of a plurality of alarms in a device that is a subject of monitoring are met, determines whether each of the alarms is a subject of inhibition that is inhibited from being displayed on a screen on which a notification on alarm generation is made, and a display controller that, when there is an alarm that is the inhibition subject, changes a style of displaying the alarms according to a type of each user who monitors alarms and outputs the style to a screen that each user browses and, when an alarm that is the subject of inhibition is not contained, outputs each of the alarms to screens the respective users browse.

### BRIEF DESCRIPTION OF THE DRAWINGS

FIG. 1 is a diagram illustrating an example of an entire configuration of a system according to a first embodiment;
FIG. 2 is a diagram illustrating display of symbols of alarms according to Example;
FIG. 3 is a diagram illustrating monitoring of alarms by a higher operator and operators according to Example;
FIG. 4 is a diagram illustrating an example of a flow of a process performed by an alarm management apparatus according to the first embodiment;
FIG. 5 is a block diagram illustrating a functional configuration of the alarm management apparatus according to the first embodiment;
FIG. 6 is a diagram illustrating an inhibition status management DB;
FIG. 7 is a diagram illustrating an alarm status management DB;
FIG. 8 illustrates an example of display of symbols of alarms according to the first embodiment;
FIG. 9 is a diagram illustrating an example of alarms that are displayed by a display controller on an operator terminal device according to the first embodiment;
FIG. 10 is a diagram illustrating an example of alarms displayed by the display controller on a higher operator terminal device according to the first embodiment;
FIG. 11 is a flowchart illustrating an example of a flow of a process according to the first embodiment;
FIG. 12 is a block diagram illustrating a functional configuration of an alarm management apparatus according to a second embodiment;
FIG. 13 is a diagram illustrating a setting information DB;
FIG. 14 is a diagram illustrating an example of a layered structure according to the second embodiment;
FIG. 15 is a diagram illustrating an example of the layered structure according to the second embodiment;
FIG. 16 illustrates an example of displays of a layered structure that are made for a higher operator and an operator, respectively, according to the second embodiment; and
FIG. 17 is a hardware configuration diagram illustrating an example of a computer that implements functions of the alarm management apparatus according to the embodiment.

### DETAILED DESCRIPTION OF THE PREFERRED EMBODIMENTS

The present disclosure will be described through embodiments and the following embodiments do not limit the disclosure according to the claims. Note that all the combinations of features described in the embodiments need not necessarily be essential for the solution of the present disclosure.

### First Embodiment

### Entire Configuration

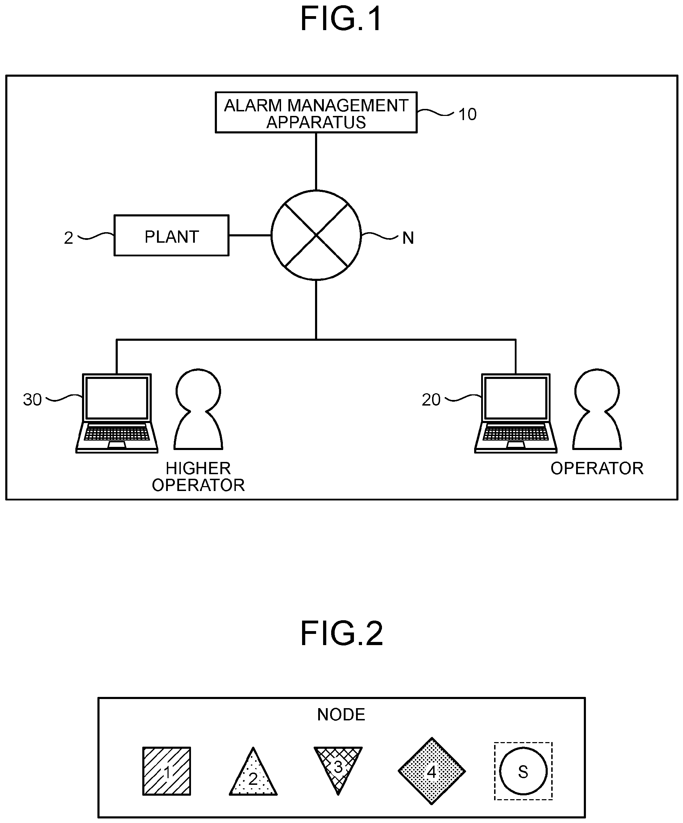

An alarm management apparatus according to the first embodiment will be described. FIG. 1 is a diagram illustrating an example of an entire configuration of a system according to the first embodiment. As illustrated in FIG. 1, the system according to the first embodiment includes an alarm management apparatus 10, an operator terminal device 20, a higher operator terminal device 30, a plant 2, and a network N. Note that the alarm management apparatus 10, the operator terminal device 20, the higher operator terminal device 30, and the plant 2 are not limited to those illustrated in FIG. 1 with respect to the number thereof.

The plant 2 is an example of various types of plants using petroleum, petrochemistry, chemistry, and gas and includes factories including various facilities for obtaining products. Examples of products are LNG (liquefied natural gas), resin (such as plastic and nylon), chemical products, etc. Examples of facilities are factory facilities, mechanical facilities, production facilities, power generation facilities, storage facilities, and facilities for drilling oil well, natural gas, etc., at well sites, etc.

The plant 2 is constructed using distributed control systems (DCS), etc. For example, although illustration in the drawings is omitted, the control system in the plant 2 executes various types of control on a control device, such as a field device that is set in a facility to be controlled, an operational device corresponding to the facility to be controlled, etc., using process data that is used in the plant 2.

Note that a field device is a device on site, such as an operational device including a measuring function of measuring an operational state (for example, the pressure, temperature, flow rate, etc.,) of a facility that is set and a function of controlling operations of the facility that is set according to a control signal that is input (for example, an actuator). The field device that is a sensor sequentially outputs the operational state of the facility that is set as process data to a controller in the control system and the field device that is an actuator controls running of a process according to a control signal that is computed by the controller.

The alarm management apparatus 10 is an apparatus that provides a function serving as the core in monitoring alarms that are generated in the plant 2. The alarm management apparatus 10 is an example of a computer that receives a notification about an alarm, outputs various types of information to a terminal device, and performs execution.

The operator terminal device 20 is an example of a terminal device that is used for monitoring by an operator who is an example of a first operator and that displays only information on an alarm that has to be handled to the operator. For example, the operator terminal device 20 is a personal computer, or the like. Note that the operator terminal device 20 may be a mobile phone, a smartphone, or a tablet terminal device. The operator terminal device 20 includes an audio input device (for example, a microphone) that receives an audio input and an audio output device (for example, a speaker) that makes an audio output.

The higher operator terminal device 30 is a terminal device that is used for monitoring by a higher operator that is an example of a second operator and that displays information on all alarms to the higher operator. The higher operator is, for example, an operator who monitors alarms in the whole plant 2. For example, the higher operator terminal device 30 is a personal computer, or the like. Note that the higher operator terminal device 30 may be a mobile phone, a smartphone, or a tablet terminal device. The higher operator terminal device 30 includes an audio input device (for example, a microphone) that receives an audio input and an audio output device (for example, a speaker) that makes an audio output.

### Introduction

First of all, problems in a general alarm monitoring system will be described. For example, a general alarm monitoring system has an inhibition function of inhibiting unnecessary alarms among a plurality of alarms to have an operator concentrate on handling a crucial alarm. Inhibiting alarms and thus misusing the method however have a possibility of causing crucial damage. In order to implement the inhibition function safely and effectively, international standards, such as ISA18.2 and IEC62682, define a plurality of sets of inhibition means according to the usage and provide guidelines about the behavior of each of the functions.

As for the alarm monitoring function, there are the case where an alarm screen displaying information on generated alarms in a form of a list is monitored and the case where a screen graphically displaying data that is measured by each measuring instrument is monitored. For example, when a screen graphically displaying information on generated alarms is monitored, the alarms are presented using shapes and colors. In general, an alarm summary screen is often monitored when checking detailed information on specific alarms and performing an alarm check in handling an alarm. On the other hand, a graphic function is often used in order to grasp the situation widely on which part a problem has occurred.

Specifically, as illustrated in FIG. 2, expressions are sometimes made by shape, color, and numerical values as an example of general inhibition statuses. FIG. 2 illustrates an example of a method of expressing inhibition statuses that is recommended by High Performance HMI.

The symbol surrounded by the rectangle in a dotted line in FIG. 2 represent an inhibited state. In other words, the symbol displayed in a circular shape and with a character of S represents the inhibited state. Other symbols display alarm statuses and the shapes and the numerical values in the frames represent the priorities of the alarms. A symbol of an inhibited alarm needs to have no overlap with other alarm symbols in shape and color and this applies to the entire system.

In the plant 2, a plurality of types of alarms are assigned to one process data value and a plurality of alarm generation conditions are met simultaneously in some cases. For example, errors generated in the case where an upper-limit error and a lower-limit error are set for upper and lower limits or when a rapid rise or drop in the data value per unit time is observed are set for one set of process data.

As described above, when a plurality of alarm generation conditions are met in the state where the inhibition function is applied, in general, symbols of a plurality of alarm statuses are not displayed and a symbol of an alarm with the top priority is displayed representatively. Such an inhibition function is often applied to the entire process data with a plurality of alarms and the state where alarms do not appear partially sometimes ends up leading to confusion.

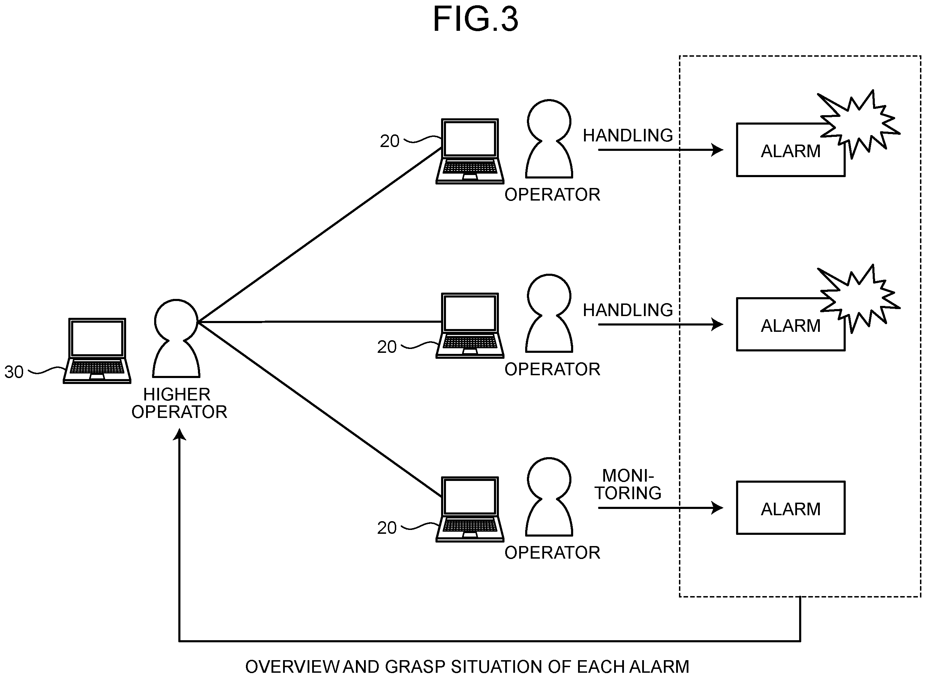

Alarm inhibition however is defined according to standards, such as ISA18.2 and use of alarm inhibition extends and flexible thinking according to various conditions is required. FIG. 3 is a diagram illustrating monitoring of alarms by a higher operator and operators according to Example. As illustrated in FIG. 3, the operator terminal device 20 outputs only a status of an alarm with the top priority that is monitored and handled by each operator to a screen. The higher operator terminal device 30 outputs the status of the alarm with the top priority displayed on each of the operator terminal devices 20 to the screen.

In other words, the same alarm status is displayed on the screens of the operator terminal device 20 and the higher operator terminal device 30. Not displaying an alarm with low priority on the screen is better because the operator handles the alarm with the top priority. The higher operator however sometimes grasps the statuses in macro perspective and thus requires display of the statuses of all alarms including an alarm with low priority other than the alarm with the top priority on the screen.

In view of the above-described problem, in the first embodiment, in a method of expressing partial inhibition of alarms, partially-inhibited alarms are expressed by displaying an alarm taking priority with which inhibition information on other alarms are associated as additional information based on alarm output information.

In the general alarm management described above, it is difficult to express partially-inhibited alarms. In general alarm management, it is possible to express partially-inhibited alarms only when all alarms are inhibited in the case where there are a plurality of alarms handled in process data.

For example, assume that, as for one set of process data on a temperature sensor, an upper limit is set at 80 degrees Celsius and there is an upper-limit exceedance alarm as an alarm that is output when 80 degrees Celsius is exceeded. Furthermore, when a process data value soars in a unit time, a soar alarm is output.

In the status of the above-described alarm definition, the inhibition function sometimes makes a partial inhibition setting. This is because, for example, in some cases, when a process data value soars in a unit time, it is previously clear that the value is not stable for a while and a soar alarm is inhibited during that time. The operator monitors only the upper-limit exceedance alarm during that time.

In such an environment, when the value soars and a symbol of an alarm is displayed using the conventional technology, a symbol of the upper-limit exceedance alarm is displayed. There is no problem in roles of the operator because only the symbol of the alarm that should be handled is displayed; however, in roles of the higher operator and an engineer, they want to pay attention to presence of inhibited alarms in some cases. For this reason, in general alarm management, it is difficult to express partially-inhibited alarms.

Thus, the alarm management apparatus 10 according to the first embodiment detects an inhibited alarm from among a plurality of alarms and changes an alarm display method according to the user, thereby providing a necessary alarm to each user appropriately.

### Process executed by Alarm Management Apparatus 10

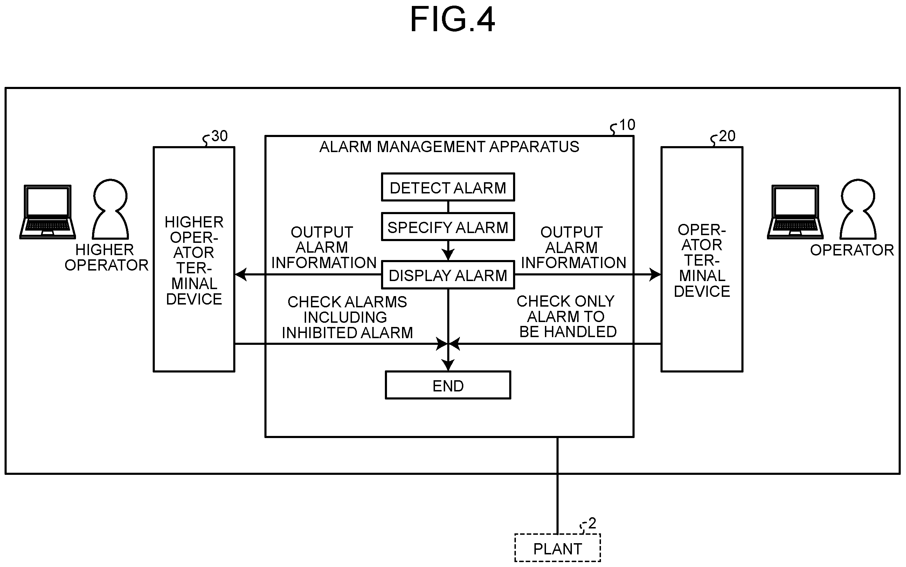

A process performed by the alarm management apparatus 10 will be described here. FIG. 4 is a diagram illustrating an example of a flow of the process performed by the alarm management apparatus 10 according to the first embodiment. Specifically, as illustrated in FIG. 4, the alarm management apparatus 10 receives information on each alarm that meets a generation condition at the same timing in the plant 2 and detects alarms that meet the occurrence condition.

The alarm management apparatus 10 determines whether there is an inhibited alarm among the detected alarms. As a result of the determination, when there is an inhibited alarm, the alarm management apparatus 10 changes a form of display and makes a display on a screen. For example, when there is an inhibited alarm, the alarm management apparatus 10 displays a symbol of the inhibited alarm in a form being associated with an alarm with the top priority and, when there is no inhibited alarm, the alarm management apparatus 10 does not change the form of display and makes a display on the screen.

The operator then handles the alarm based on a displayed alarm status. Based on the displayed alarm statuses, the higher operator checks the statuses of all the alarms including the inhibited alarm.

In other words, the alarm management apparatus 10 reads various types of data, such as data on the alarm inhibition status and data on alarm status management, detects the inhibited alarm, and changes the alarm display method according to the user, thereby providing a necessary alarm to each user appropriately. As a result, the alarm management apparatus 10 is able to provide the alarm display method corresponding to both a hope of the operator to display only information on an alarm to be handled and a hope of the higher operator to grasp the situation including information on the inhibited alarm.

### Functional Configuration of Alarm Management Apparatus 10

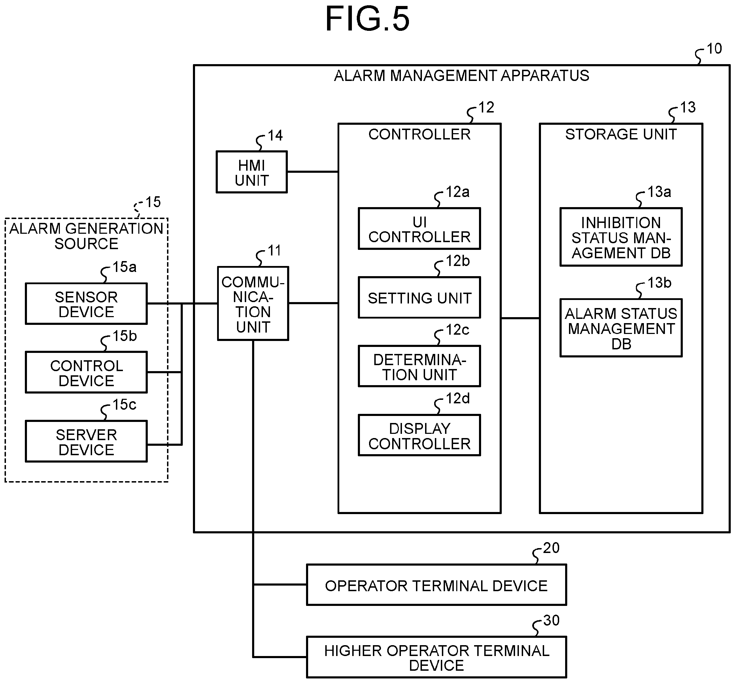

A functional configuration of the alarm management apparatus 10 will be described next. FIG. 5 is a block diagram illustrating an example of a functional configuration of the alarm management apparatus 10 according to the first embodiment. As illustrated in FIG. 5, the alarm management apparatus 10 includes a communication unit 11, a controller 12, a storage unit 13, and an HMI unit 14.

The HMI unit 14 is a component that provides an interface part relating to input and output to and from the operator and the higher operator who use the alarm management apparatus 10, etc. The HMI unit 14 includes an input interface that receives input operations from the operator and the higher operator. The input interface, for example, is realized using a touch panel, a pointing device, a button, a microphone, or the like. The input interface may be realized using software parts.

The HMI unit 14 includes an output interface that presents image information, light emission information, audio information, and the like, to the operator terminal device 20 and the higher operator terminal device 30. The output interface, for example, is realized using a display, a light-emitting diode (LED), a speaker, or the like. The HMI unit 14 may be realized using a touch panel display that is an integration of an input interface and an output interface.

The HMI unit 14 may be an interface part enabling a remote input and a remote output to and from a personal computer (PC), or the like, to which the HMI is connected remotely.

The communication unit 11, for example, is realized using a network interface card (NIC), or the like. The communication unit 11 is connected to a network (not illustrated in the drawings) in a wired or wireless manner and transmits and receives various types of information to and from an alarm generation source 15, the operator terminal device 20, and the higher operator terminal device 30 via the network.

The alarm generation source 15 that is connected to the communication unit 11 will be described here. First of all, a sensor device 15a of the alarm generation source 15 is a device, such as a temperature sensor, a pressure sensor, or a flow sensor, that does not implement an alarm detection function and that collects process values in the plant 2. Secondly, a control device 15b of the alarm generation source 15 is a device that implements the alarm detection function and is a controller that detects an alarm representing an abnormality in the plant 2 based on the process values in the plant 2, or the like. Thirdly, a server device 15c of the alarm generation source 15 is a device that implements the alarm detection function according to OPC UA A&C (Alarms and Conditions) that is a standard and is an alarm server that detects an alarm representing an abnormality in the plant 2, or the like, based on the process values in the plant 2, or the like.

The storage unit 13, for example, is realized using a semiconductor memory device, such as a random access memory (RAM) or a flash memory, or a storage device, such as a hard disk or an optical disk and, in the example in FIG. 5, the storage unit 13 includes an inhibition status management DB 13a, an alarm status management DB 13b, and a setting information DB 13c.

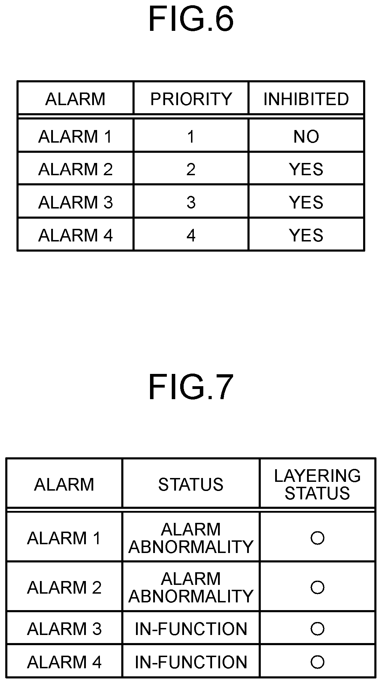

The inhibition status management DB 13a stores data on an alarm that is inhibited by the inhibition function. FIG. 6 is a diagram illustrating the inhibition status management DB. As illustrated in FIG. 6, the inhibition status management DB 13a stores items of "Alarm", "Priority" and "Inhibition". "Alarm" is, for example, information that specifies an alarm on which a generation condition is met and is information that specifies an alarm of which notification is made because the occurrence condition is met in a device. "Priority" is information that specifies priority of the alarm. "Inhibition" is information that specifies whether the alarm is inhibited.

Description will be given using the example in FIG. 6. The inhibition status management DB 13a stores "Alarm 1, 1, and No", "Alarm 2, 2, and Yes", "Alarm 3, 3, and Yes", and "Alarm 4, 4, and Yes" as "Alarm, Priority, and Inhibition". In other words, the inhibition status management DB 13a stores a status that "Alarm 1" has the "top" priority and is "not inhibited". The inhibition status management DB 13a stores a status that "Alarm 2" has the "second" priority and is "inhibited", a status that "Alarm 3" has the "third" priority and is "inhibited", and a status that "Alarm 4" has the "fourth" priority and is "inhibited".

The alarm status management DB 13b stores data for managing the alarm status in a layered structure. FIG. 7 is a diagram illustrating the alarm status management DB. As illustrated in FIG. 7, the alarm status management DB 13b stores items of "Alarm", "Status" and "Layering Status". "Alarm" stored herein is the same as that in FIG. 6 and "Status" is information that specifies whether an alarm is generated. "Layering Status" is information that, when the alarm status is expressed using a layered structure, specifies a status where specifying on a node-by-node basis can be performed. For example, "layering status" is displayed by o when specifying on a node-by-node basis in layers can be performed and is displayed by × when specifying on a node-by-node basis in layers cannot be performed.

Description will be given using the example in FIG. 7. The alarm status management DB 13b stores "Alarm 1, Alarm Abnormality, and ∘", "Alarm 2, Alarm Abnormality, and ∘", "Alarm 3, In-function, and ∘", and "Alarm 4, In-function, and ∘" as "Alarm Status and Priority, and Inhibition. In other words, the alarm status management DB 13b stores a status that the "Alarm 1" is in a status of "alarm abnormality" and has a layering status of "o" where specifying on a node-by-node basis in layers can be performed. The alarm status management DB 13b also stores a status that the "Alarm 2" is in a status of "alarm abnormality" and has a layering status of "o" where specifying on a node-by-node basis in layers can be performed, a status that the "Alarm 3" is in a status of "in-function" and has a layering status of "o" where specifying on a node-by-node basis in layers can be performed, and a status that the "Alarm 4" is in a status of "in-function" and has a layering status of "∘".

The alarm management apparatus 10 is able to check which alarm is inhibited by collating data that is stored in the inhibition status management DB 13a and the alarm status management DB 13b.

Back to FIG. 5, the controller 12 of the alarm management apparatus 10 will be described. The controller 12 is, for example, an electric circuit, such as a central processing unit (CPU) or a micro processing unit (MPU), or an integrated circuit, such as an application specific integrated circuit (ASIC) or a field programmable gate array (FPGA).

The controller 12 includes a UI controller 12a, a setting unit 12b, a determination unit 12c and a display controller 12d. The UI controller 12a controls output and input from and to the operator and the higher operator via the HMI unit 14.

The setting unit 12b receives an operation relating to a setting on the operator terminal device 20 and the higher operator terminal device 30 of the operator and the higher operator via the HMI unit 14 and stores content of the setting corresponding to the operation in the setting information DB 13c.

For example, the setting unit 12b receives an operation of specifying display of only an alarm to be handled, which is an operation performed by the operator, and stores setting content in the setting information DB 13c. The setting information DB 13c receives an operation of specifying display of status of an alarm including information on an alarm, which is an operation performed by the higher operator, and stores setting content in the setting information DB 13c. The setting unit 12b also receives an operation of specifying display of a status of an alarm in a unit that the operator or the higher operator wants, such as a status of a representative alarm in each layer in the layering status or statuses of individual alarms in each layer, and stores setting content in the setting information DB 13c.

When conditions for generation of a plurality of alarms are met in a device that is a subject of monitoring, the determination unit 12c determines whether each of the alarms is a subject of inhibition that is inhibited from being displayed on a screen on which a notification on alarm generation is made. For example, from information on whether there is an inhibited state in generated alarms and information on whether the statuses of alarms are alarm abnormality that are read from the inhibition status management DB 13a and the alarm status management DB 13b, the determination unit 12c determines that conditions for generation of alarms are met with respect to Alarm 1 and Alarm 2 and Alarm 2 is a subject of inhibition.

When there is an alarm that is a subject of inhibition, the display controller 12d changes a style of displaying the alarms according to a type of each user who monitors alarms and outputs the style to a screen that each user browses and, when an alarm that is the subject of inhibition is not contained, the display controller 12d outputs each of the alarms to a screen that each user browses.

For example, when there is an alarm that is a subject of inhibition, the display controller 12d outputs an alarm representing a status where display of the alarms is inhibited to the screen of the operator who monitors each device that is a source of generation of each alarm among the users and outputs an alarm representing a status where there are a plurality of alarms and there is an inhibited alarm to a screen of the higher operator who monitors the system including each device in an overviewing manner.

When there is an alarm that is the subject of inhibition, the display controller 12d generates a second symbol obtained by adding information representing that there is an alarm that is a subject of inhibition to a first symbol corresponding to an alarm with the top priority among the alarms, outputs the first symbol to the screen of the first operator who monitors each of devices from which alarms are generated, respectively, among the users, outputs the second symbol to the screen of the second operator who overviews and monitors the entire system including the respective devices. The display controller 12d generates a second symbol to which information representing that there is an alarm that is the subject of inhibition is added by combining a shape and a color.

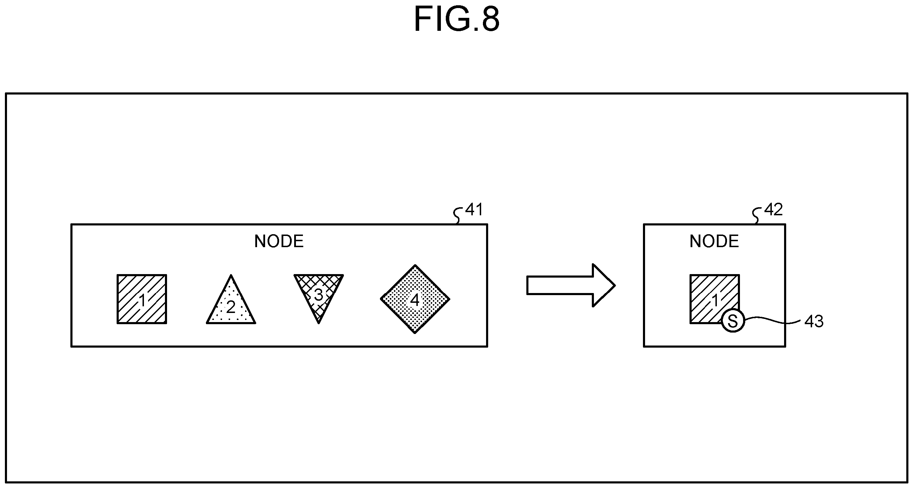

Using FIG. 8, a symbol that represents an inhibited alarm and that is assigned by the display controller 12d will be described. FIG. 8 illustrates an example of a diagram presenting symbols of alarms that are assigned by the display controller 12d of the alarm management apparatus 10 according to the first embodiment. A node 41 and a node 42 are used for description in FIG. 8.

In the node 41, symbols of four alarms are expressed by shape and color based on the priorities 1 to 4. Note that 1 represents high priority of the alarm and 4 represents low priority. For example, when the determination unit 12c has a determination result that there is an alarm that is inhibited, the display controller 12d displays a symbol 43 of the inhibited alarm using a circular shape and a character of S. First of all, when Alarms 1 to 4 represented in the node 41 are generated simultaneously, the display controller 12d reads the priorities and whether each alarm is inhibited from the inhibition status management DB 13a. For example, the display controller 12d reads that Alarm 1 has the status with the top priority and without inhibition and Alarm 2 to Alarm 4 have the status with low priorities and with inhibition.

Based on the reading each of the priorities of the respective alarms and whether the alarm is inhibited, the display controller 12d displays the symbol 43 of the inhibited alarm in a form of being associated with the alarm having the top priority, which is a symbol displayed in the node 42. For example, because Alarms 2 to 4 are inhibited, the display controller 12d displays the symbol 43 of the inhibited alarms. In other words, the symbol 43 of the alarms contain information on Alarms 2 to 4. Lastly, the display controller 12d displays the symbol 43 of the inhibited alarms in a form of being associated with Alarm 1 with the top priority.

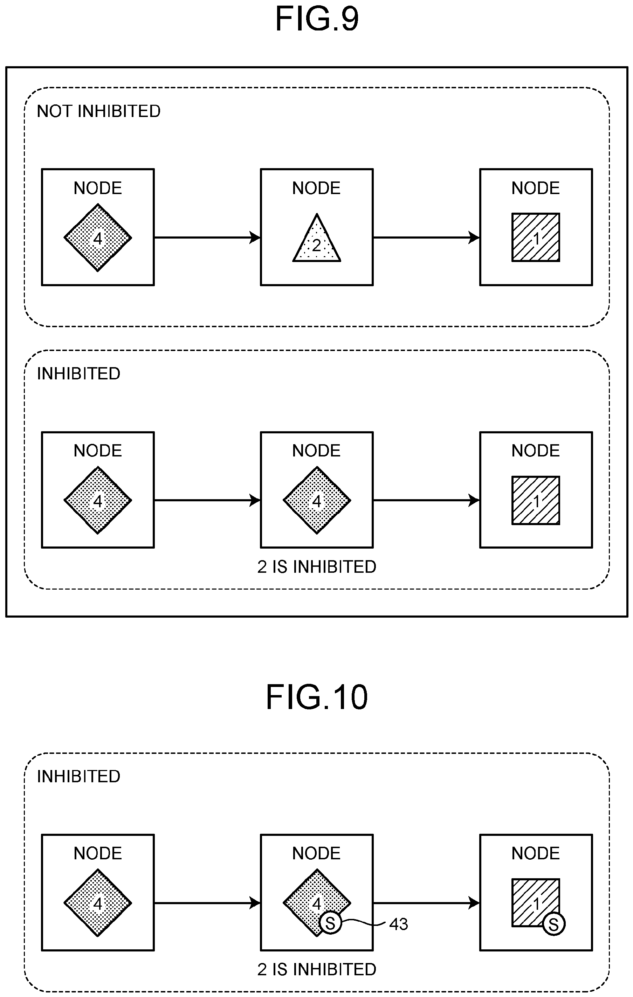

Using FIGS. 9 and 10, an example of alarms that are displayed by the display controller 12d on the operator terminal device 20 and the higher operator terminal device 30 will be described. FIG. 9 is a diagram illustrating an example of alarms that are displayed by the display controller 12d on the operator terminal device 20 according to the first embodiment. The status where Alarm 2 is not inhibited and the status where Alarm 2 is inhibited in FIG. 9 will be described separately.

First of all, the case where Alarm 2 is not inhibited will be described. Assume that the alarm management apparatus 10 displays Alarm 4 on the screen. Next, when Alarm 4 and Alarm 2 are generated simultaneously, the alarm management apparatus 10 reads the priority of each alarm and whether each alarm is inhibited from the inhibition status management DB 13a and displays Alarm 2 with high priority. Lastly, when Alarm2 and Alarm 1 are generated simultaneously, the alarm management apparatus 10 reads the priority of each alarm and whether each alarm is inhibited from the inhibition status management DB 13a and displays Alarm 1 with the top priority on the operator terminal device 20.

The case where Alarm 2 is inhibited in FIG. 9 will be described next. Assume that the alarm management apparatus 10 displays Alarm 4 on the screen. Next, when Alarm 4 and Alarm 2 are generated simultaneously, the alarm management apparatus 10 reads the priority of each alarm and whether each alarm is inhibited from the inhibition status management DB 13a, compares the priorities, determines that Alarm 2 is inhibited, and displays Alarm 4 without displaying Alarm 2. Lastly, when Alarm 2 and Alarm 2 are generated simultaneously, the alarm management apparatus 10 reads the priority of each alarm and whether each alarm is inhibited from the inhibition status management DB 13a, compares the priorities, determines that Alarm 2 and Alarm 4 are inhibited, and displays Alarm 1 that is the alarm with top priority on the operator terminal device 20 without displaying Alarm 2 and Alarm 4.

As described above, the display controller 12d does not display information on the inhibited alarm on the operator terminal device 20. Accordingly, the alarm management apparatus 10 displays only information on the alarm to be handled by the operator on the operator terminal device 20.

FIG. 10 is a diagram illustrating an example of alarms displayed on the higher operator terminal device 30 according to the first embodiment. The status where Alarm 2 is inhibited in FIG. 10 will be described.

For example, the case where Alarm 2 is inhibited will be described. The alarm management apparatus 10 displays Alarm 4 on the screen. Next, when Alarm 4 and Alarm 2 are generated simultaneously, the alarm management apparatus 10 reads the priority of each alarm and whether each alarm is inhibited from the inhibition status management DB 13a, compares the priorities, and determines that Alarm 2 is inhibited. Next, the alarm management apparatus 10 generates the symbol 43 of the inhibited alarm and displays the symbol 43 in a form of being associated with Alarm 4.

Lastly, when Alarm 4 and Alarm 1 are generated simultaneously, the alarm management apparatus 10 reads the priority of each alarm and whether each alarm is inhibited from the inhibition status management DB 13a, compares the priorities, determines that Alarm 2 and Alarm 4 are inhibited, and displays the symbol 43 of the inhibited alarm in a form of being associated with Alarm 1 that is the alarm with the top priority on the higher operator terminal device 30. In other words, the symbol 43 of the inhibited alarm contains information on Alarm 2 and Alarm 4.

As described above, the display controller 12d displays the symbol expressing the inhibited alarms in an associated form on the higher operator terminal device 30, thereby making a display to cause the higher operator to be conscious of presence of the inhibited alarms.

### Procedure of Process of First Embodiment

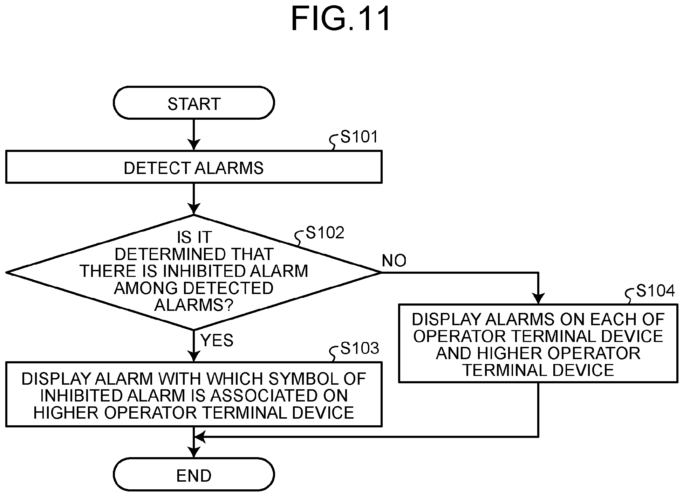

Using FIG. 11, a procedure of the process performed by the alarm management apparatus 10 according to the first embodiment will be described. FIG. 11 is a flowchart illustrating an example of a flow of the process performed by the alarm management apparatus 10 according to the first embodiment.

As exemplified in FIG. 11, the alarm management apparatus 10 detects alarms based on alarm output information that is output from the plant 2 (step S101). Next, the alarm management apparatus 10 determines whether there is an inhibited alarm among the detected alarms (step S102).

When there is an inhibited alarm (Yes at step S102), the alarm management apparatus 10 displays a symbol of the inhibited alarm in a form of being associated with the alarm with the top priority on the higher operator terminal device 30 (step S103) and ends the process. On the other hand, when there is no inhibited alarm (No at step S102), the alarm management apparatus 10 displays the alarms on each of the operator terminal device 20 and the higher operator terminal device 30 (step S104) and ends the process.

### Effect of First Embodiment

In the first embodiment, the alarm management apparatus 10 determines whether there is an inhibited alarm based on information on alarms that is output from the plant 2, assigns a symbol to the inhibited alarm, and displays the inhibited alarm in a form of being associated with the alarm with the top priority. This enables the alarm management apparatus 10 to express partially inhibited alarms.

The alarm management apparatus 10 displays only the alarm with the top priority on the operator terminal device 20 and displays only the alarm with the top priority on the operator terminal device 20 and displays also information on the inhibited alarm on the higher operator terminal device 30, thereby making it possible to change the display method according to the user.

### Second Embodiment

### Overview of Second Embodiment

In the first embodiment, the example where an inhibited alarm is displayed in a form of being associated with an alarm with the top priority is described and the disclosed alarm management apparatus 10 is also able to express an inhibited alarm using a layered structure. In the second embodiment, an example where an inhibited alarm is expressed using a layered structure will be described. Note that the system configuration of the second embodiment is the same as that in FIG. 5 described in the first embodiment and thus detailed description thereof will be omitted.

### Functional Configuration of Alarm Management Apparatus 10

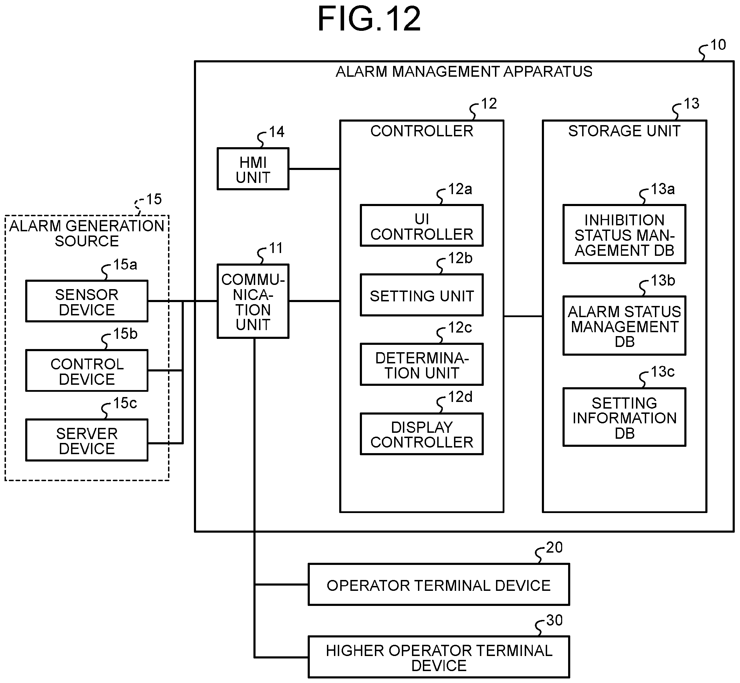

A functional configuration of the alarm management apparatus 10 will be described next. FIG. 12 is a block diagram illustrating an example of the functional configuration of the alarm management apparatus 10 according to the second embodiment. The alarm management apparatus 10 according to the second embodiment has the same configuration as those of the communication unit 11, the controller 12, the HMI unit 14, and the inhibition status management DB 13a and the alarm status management DB 13b of the storage unit 13 illustrated in FIG. 5 and thus detailed description thereof will be omitted. Setting information DB 13c of the storage unit 13 and the setting unit 12b and the display controller 12d of the controller 12 will be described here.

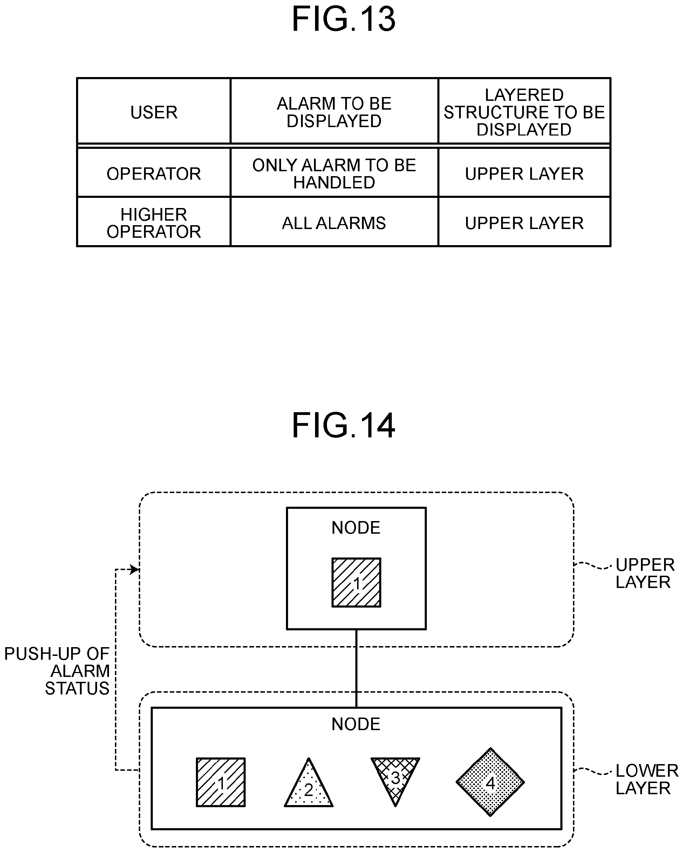

The setting information DB 13c stores data on setting information that is output from the operator terminal device 20 and the higher operator terminal device 30. FIG. 13 is a diagram illustrating the setting information DB. As illustrated in FIG. 13, the setting information DB 13c stores items of "User", "Alarm to be displayed", and "Layered Structure to be displayed".

"User" stored is information that specifies a user who sets setting information and who is, for example, an operator or a higher operator. "Alarm to be displayed" is information that specifies an alarm that is set by the user. For example, "Alarm to be displayed" is information that specifies a setting for displaying only an alarm to be handled when an operator makes a setting for displaying an alarm to be handled and is information that specifies a setting for displaying all alarms when a higher operator makes a setting for displaying all alarms. "Layered Structure to be displayed" is information that specifies a layer that is set by the user.

Description will be given using the example in FIG. 13. The setting information DB 13c stores "Operator, Only alarm to be handled, and Upper Layer" and "Operator, All Alarms, and Upper Layer" as "User, Alarm to be displayed, and Layered Structure to be displayed".

In other words, the setting information DB 13c stores the fact that "only an alarm to be handled" is set for an alarm that the "operator" who is the user wants to check and an "upper layer" is selected for the layered structure to be displayed. The setting information DB 13c also stores the fact that "all alarms" are set for an alarm that the "higher operator" who is the user wants to check and the "upper layer" is selected for the layered structure to be displayed.

The display controller 12d of the controller 12 makes a display in a layered structure as a method of displaying alarms on each of the screens of the operator and the higher operator. For example, the display controller 12d makes a notification of statuses of a plurality of alarms from a lower layer to an upper layer in a layered structure and displays information on a representative alarm status in each layer.

The display controller 12d receives a request for setting an alarm to be displayed on the screens from the operator and the higher operator and displays information on a representative alarm status in each layer.

### Specific Example

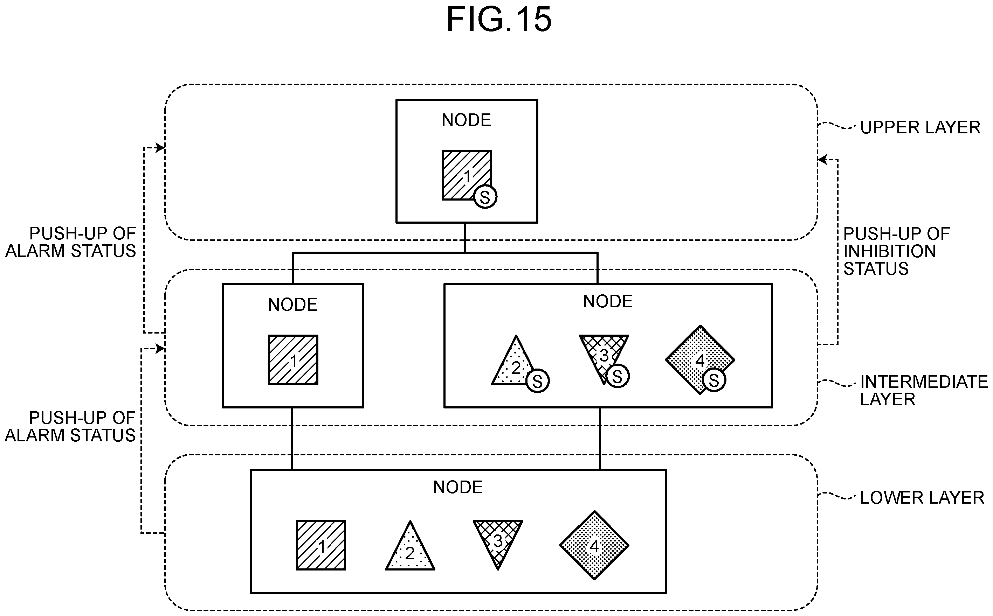

Using FIG. 14 and FIG. 15, the layered structure of alarm statuses will be described. FIG. 14 illustrates an example of display of layered structure according to the second embodiment. As illustrated in FIG. 14, the alarm management apparatus 10 displays all alarm symbols in a lower layer in a layered structure and displays an alarm symbol with high priority in an upper layer. In transition from the lower layer to the upper layer, the alarm management apparatus 10 reads information indicating that Alarm 1 has the top priority from the inhibition status management DB 13a, makes a notification of a change in the alarm status from a node of the lower layer to a node of the upper layer, and makes displays on the screens of the operator terminal device 20 and the higher operator terminal device 30. In this manner, the alarm management apparatus 10 displays the alarm with the top priority on the screens. A notification of a change in the alarm status to the upper layer is referred to as a push-up below. Note that there may be a plurality of nodes and layers in FIG. 14.

FIG. 15 illustrates an example of display of the layered structure according to the second embodiment. As illustrated in FIG. 15, the alarm management apparatus 10 displays all alarm symbols in a lower layer in a layered structure and displays an alarm symbol with high priority in an upper layer as in FIG. 14. The alarm management apparatus 10 executes a push-up of the alarm status from the lower layer to an intermediate layer and a push-up from the intermediate layer to the upper layer and executes a push-up of the inhibition information from the intermediate layer to the upper layer.

For example, in FIG. 15, the display controller 12d reads information indicating that Alarm 1 has the top priority and is not inhibited and Alarms 2 to 4 are inhibited from the inhibition status management DB 13a and reads information indicating that Alarm 1 and Alarm 2 are in an abnormality status and Alarm 3 and Alarm 4 are in function from the alarm status management DB 13b.

Next, in transition from the lower layer to the intermediate layer in FIG. 15, the display controller 12d displays only Alarm 1 with the top priority based on the information that is read from the inhibition status management DB 13a. When it is determined that Alarms 2 to 4 are inhibited, the display controller 12d displays symbols of the inhibited alarms in a form of being associated with Alarms 2 to 4.

In transition from the intermediate layer to the upper layer in FIG. 15, the display controller 12d displays information on Alarms 2 to 4 as a symbol of inhibited alarms in a form of being associated with Alarm 1 that is the alarm with the top priority.

Using FIG. 15, a site, an area, and a function tag of the plant 2 will be described. A device that is a subject of monitoring is a device that constitutes the plant2 and a layered structure has the site of the plant 2, each area contained in the site, and a function tag contained in each area. The function tag herein is a function unit of collection of related items for managing process data and alarms.

Description will be given using the example in FIG. 15. In the layered structure displayed by the alarm management apparatus 10, the site corresponds to the upper layer, the area corresponds to the intermediate layer, and the function tag corresponds to the lower layer. When there is an inhibited alarm, the alarm management apparatus 10 generates a symbol of the inhibited alarm and displays the symbol in a form of being associated with the alarm with the top priority.

For example, the alarm management apparatus 10 outputs information on alarms from the function tag to the area and, at the same time, outputs information on whether there is an alarm that is inhibited to the status of the alarm of the function tag to the area, and keeps synchronization between these sets of information. When all the alarms contained in the function tag are subjects of inhibition, the alarm management apparatus 10 is able to display symbols of the inhibited alarms regardless of alarm occurrence conditions.

Based on the information on the alarm with the top priority and the inhibited alarms that is output to the area, the alarm management apparatus 10 outputs the statuses of the alarms to the site and displays the statuses. The above-described layered structure enables the alarm management apparatus 10 to allow the higher operator who monitors alarms in macro perspective to monitor the overview of the statuses of the alarms in each of the area and the site. The alarm management apparatus 10 also aggregates, in the upper layer of the layered structure, information on the statuses of the representative alarms containing the statuses of all alarms contained in the lower layer.

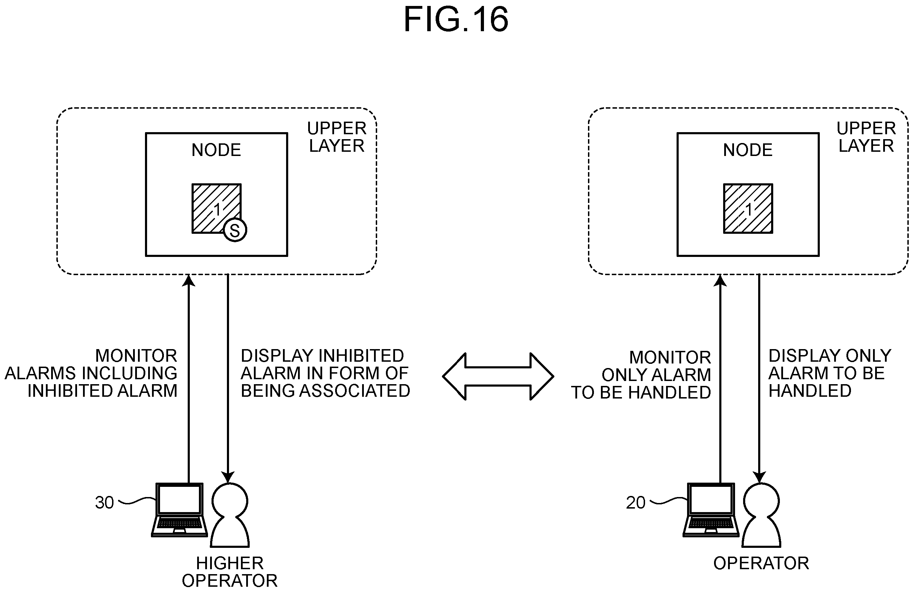

Using FIG. 16, the layered structure displayed on the higher operator terminal device 30 and the operator terminal device 20 will be described next. FIG. 16 is an example of displays of the upper layer of the layered structure that are displayed to each of the higher operator and the operator according to the second embodiment.

For example, assume that a setting for performing monitoring alarms including the inhibited alarm is input from the higher operator terminal device 30 to the alarm management apparatus 10 and the setting is stored in the setting information DB 13c. The alarm management apparatus 10 reads information that is stored in the setting information DB 13c and displays a symbol of the inhibited alarm in a form of being associated with the alarm with the top priority on the higher operator terminal device 30.

Assume that a setting for performing monitoring only the alarm to be handled is input from the operator terminal device 20 to the alarm management apparatus 10 and is stored in the setting information DB 13c. The alarm management apparatus 10 reads the information that is stored in the setting information DB 13c and displays only the alarm with the top priority on the operator terminal device 20.

The alarm management apparatus 10 thus provides the alarm management apparatus 10 that displays the symbol of the inhibited alarm on the higher-operator terminal device 30 and that meets a hope of the higher operator to pay attention to the inhibited alarm. The alarm management apparatus 10 provides the alarm management apparatus 10 that displays only the alarm with the top priority on the operator terminal device 20 and that meets a hope of the operator to check only the alarm to be handled.

### Effect of Second Embodiment

For example, in a general alarm management method, alarm statuses are displayed not only in a unit of process data but also in various units, for example, on an area-by-area basis or a plant-by-plant basis. In such a status as described above, the alarm status is passed to the upper layer in layers and the shape and color of the statue of the alarm with the top priority are representatively displayed as the status of the alarm. While a general method of managing alarm considers passing the status of a representative alarm to the upper layer, it is difficult to pass information on the inhibition status to the upper layer and express information.

The alarm management apparatus 10 thus receives inputs of settings from the operator terminal device 20 and the higher operator terminal device 30 and displays alarms including the inhibition status in the layered structure using the input setting information and stored information on the statuses of the alarms. Accordingly, the alarm management apparatus 10 is able to aggregate information on the status of the representative alarm containing the alarm situation of all the alarm information contained in the lower layer and provide the aggregated information in the upper layer of the layered structure.

### Third Embodiment

The embodiments of the present disclosure have been described, and the preset disclosure may be carried out in various differing modes in addition to the above-described embodiments.

### Mode of Use

The alarm management apparatus 10 collects statistical data information of each node of the layered structure. For example, the alarm management apparatus 10 utilizes the number of alarms that are inhibited on a node-by-node basis as statistical data. Specifically, the alarm management apparatus 10 calculates statistical data, such as the number of alarms and the number of sets of inhibition of alarms obtained by aggregating lower nodes with respect to each node, displays the data on the screen optionally by the operator or the higher operator, or writes as history information in data and accordingly transition of the number of alarms and the number of sets of inhibition with respect to each node is collected statistically and is usable to evaluate the effect of the inhibition function.

### Hardware

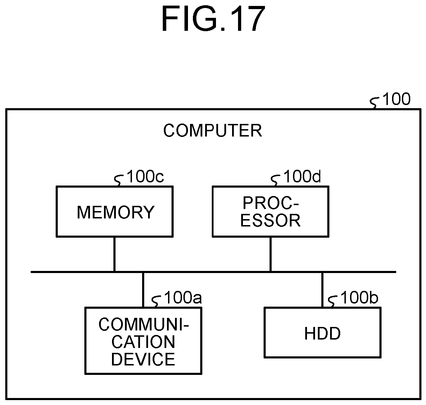

The alarm management apparatus 10 according to the above-described embodiments, for example, are realized by a computer 100 configured as illustrated in FIG. 17. The alarm management apparatus 10 will be exemplified and described below. FIG. 17 is a hardware configuration diagram illustrating an example of the computer 100 that implements the functions of the alarm management apparatus 10 according to the embodiments.

As illustrated in FIG. 17, the computer 100 includes a communication device 100a, a hard disk drive (HDD) 100b, a memory 100c, and a processor 100d. The units illustrated in FIG. 17 are connected mutually by a bus, or the like.

The communication device 100a is a NIC, or the like, and communicates with another server. The HDD 100b stores a program that implements the functions illustrated in FIG. 5 and FIG. 12 and a database.

The processor 100d reads the program that executes the same process as that of each of the processors illustrated in FIG. 5, etc., from the HDD 100b, or the like, and loads the program into the memory 100c, thereby running the process of implementing each of the functions illustrated in FIG. 5, etc. For example, the process executes the same function as that of each of the functions that the alarm management apparatus 10 includes. Specifically, the processor 100d reads the program with the same functions as those of the UI controller 12a, the setting unit 12b, the determination unit 12c, the display controller 12d, etc., from the HDD 100b, or the like. The processor 100d executes the process that executes the same processing as that performed by the UI controller 12a, the setting unit 12b, the determination unit 12c, the display controller 12d, etc.

As described above, the computer 100 runs as an information processing device that executes various processing methods by reading and executing the program. The computer 100 may read the above-described program from a recording medium using a medium reading device and execute the read program, thereby enabling implementation of the same functions as those of the above-described embodiments. The program herein is not limited to being executed by the computer 100. For example, the present disclosure is similarly applicable to the case where a computer or a server that has another hardware configuration executes the program or the case where the computer and the server executes the program cooperatively.

The program can be distributed via a network, such as the Internet. The program can be recorded in a computer-readable recording medium, such as a hard disk, a flexible disk (FD), a CD-ROM, a magneto-optical disk (MO), or a digital versatile disc (DVD), can be read by a computer from the recording medium, and thus can be executed.

The present disclosure was made in view of the above-described circumstances and a higher operator in alarm monitoring in a plant is able to flexibly express and provide information on an inhibited alarm.

## Claims

1. An alarm management apparatus (10) comprising:
a determination unit (12c) that, when conditions for generation of a plurality of alarms in a device that is a subject of monitoring are met, determines whether each of the alarms is a subject of inhibition that is inhibited from being displayed on a screen on which a notification on alarm generation is made; and
a display controller (12d) that, when there is an alarm that is the inhibition subject, changes a style of displaying the alarms according to a type of each user who monitors alarms and outputs the style to a screen that each user browses and, when an alarm that is the subject of inhibition is not contained, outputs each of the alarms to screens the respective users browse.

2. The alarm management apparatus (10) according to claim 1, wherein, when there is an alarm that is the subject of inhibition, the display controller (12d) outputs an alarm representing a status where display of the alarms is inhibited to the screen of a first operator who monitors each of devices from which alarms are generated, respectively, among the users and outputs an alarm representing a status where there are the alarms and there is an inhibited alarm to the screen of a second operator who overviews and monitors the entire system containing each device.

3. The alarm management apparatus (10) according to claim 1 or 2, wherein, when there is an alarm that is the subject of inhibition, the display controller (12d) generates a second symbol obtained by adding information representing that there is an alarm that is a subject of inhibition to a first symbol corresponding to an alarm with the top priority among the alarms, and
the display controller (12d) outputs the first symbol to the screen of the first operator who monitors each of devices from which alarms are generated, respectively, among the users, and outputs the second symbol to the screen of the second operator who overviews and monitors the entire system including each of the devices.

4. The alarm management apparatus (10) according to any one of claims 1 to 3, wherein the display controller (12d) generates a second symbol to which information representing that there is an alarm that is the subject of inhibition is added by combining a shape and a color.

5. The alarm management apparatus (10) according to any one of claims 1 to 4, wherein the display controller (12d) displays an alarm as a layered structure as a method of displaying alarms to the respective screens of the first operator and the second operator.

6. The alarm management apparatus (10) according to claim 5, wherein the device that is the subject of monitoring is an apparatus that constitutes a plant,
the display controller (12d) displays the alarm as a layered structure, and
the layered structure has a site of the plant, each area contained in the site, and a function tag contained in each area.

7. The alarm management apparatus (10) according to claim 5 or 6, wherein the display controller (12d) makes a notification of statuses of the alarms from a lower layer of the layered structure to an upper layer and displays information on a representative alarm state in each layer.

8. The alarm management apparatus (10) according to claim 7, wherein the display controller (12d) receives requests for setting alarms to be displayed on screens from the first operator and the second operator and displays information on a representative alarm status in each of the layers.

9. An alarm management method executed by a computer (10), the method comprising:
when conditions for generation of a plurality of alarms in a device that is a subject of monitoring are met, determining whether each of the alarms is a subject of inhibition that is inhibited from being displayed on a screen on which a notification on alarm generation is made; and
display control including, when there is an alarm that is the inhibition subject, changing a style of displaying the alarms according to a type of each user who monitors alarms and outputting the style to a screen that each user browses and, when an alarm that is the subject of inhibition is not contained, outputting each of the alarms to screens the respective users browse.

10. An alarm management program that causes a computer (10) to execute a process comprising:
when conditions for generation of a plurality of alarms in a device that is a subject of monitoring are met, determining whether each of the alarms is a subject of inhibition that is inhibited from being displayed on a screen on which a notification on alarm generation is made; and
display control including, when there is an alarm that is the inhibition subject, changing a style of displaying the alarms according to a type of each user who monitors alarms and outputting the style to a screen that each user browses and, when an alarm that is the subject of inhibition is not contained, outputting each of the alarms to screens the respective users browse.
